# EUROPEAN PATENT APPLICATION

(11) **EP 1 494 047 A1**
(43) Date of publication of application: **05.01.2005**
(21) Application number: 03405493.2
(22) Date of filing: 02.07.2003
(51) Int. Cl.: G01T 1/29

(54) **Aperture for coded-aperture imaging**

(71) Applicant: Berner Fachhochschule Hochsschule für Technik und Architektur Biel-Bienne, 2501 Biel-Bienne (CH)
(72) Inventor: Cattin-Liebl, Roger, 2540 Grenchen (CH)
(74) Representative: Liebetanz, Michael, Dipl.-Phys.

(57) **Abstract**

An aperture for coded-aperture imaging comprises a sequence of transparent (2) and opaque (3) circles, wherein the transparent (2) and opaque (3) circles represent a one-dimensional sequence known for the construction of coded aperture masks. This achieves a coded aperture (1) which is invariant to rotation. The aperture according to the invention can readily be used in coded-aperture imaging optical transmission of data between a screen, e.g. a computer screen, displaying the intermediate image, and a smart-card, wherein the user of such a smart-card is not supposed to align the camera comprising the decoding aperture (1), i.e. the smard-card, with the coding mask used to prepare the intermediate image.

## Description

The invention relates to an aperture for coded-aperture imaging.

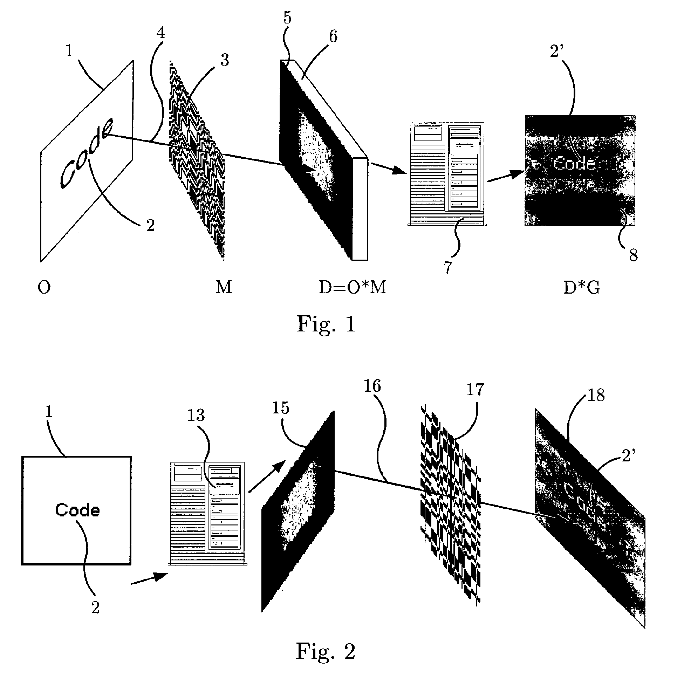

Several coded apertures and applications are known from the prior art. There are many applications of this technique for far field objects. There is a plurality of gamma and x-ray telescopes integrated in satellites using such a technique as described in connection with Fig. 1.

Such a method for use with near field objects is shown in US 4,209,780. This patent publication discloses the use of redundant arrays as coded-apertures to improve the transmission characteristics.

US 4,228,420 already describes an array of coded apertures. In said document the array of coded apertures is provided to minimize detector size. The apertures shown in the different applications according to the prior art are used for coded aperture imaging.

However, all known codes have the drawback that they are not invariant to rotation. Therefore the decoding mask G used for the optical reconstruction of coded aperture intermediate images must be exactly aligned to the coding mask M. Any rotation around the optical axis leads immediately to a corrupted reconstruction. Already rotations by several degrees (e.g. 5°) are sufficient to make an alphanumerical information contained in the original image not readable. This is not a major problem for the known far field coded aperture imaging since the apparatuses are specifically aligned to take the images. The same is true for medical near field application as suggested in WO 02/056055, since the medical equipment is installed in a well defined way for the examinations to be carried out. However, the use of such coded-aperture imaging by particulars, e.g. within the use of a aperture coded imaging as described in the co-pending application of the inventors from which Fig. 2 is taken to explain the principles, will not be possible due to the fact that a person cannot hold a hand-held device stable over a longer period of time.

It is an object of the invention to provide a new approach for the optical transport of information from an existing image into an extremely small camera, wherein the camera has not to be held exactly in the direction of the existing image.

This object is achieved with an aperture code having the characteristic features of claim 1.

The invention is based on the insight that a rotation invariant decoding mask is used similar to the lens of a camera to reconstruct an aperture-coded intermediate image.

Further advantageous embodiments are characterized through the features mentioned in the dependent claims.

The invention is now described by way of example on the basis of the accompanying drawings:
- Fig. 1: shows a schematic view of the known method of coded-aperture imaging,
- Fig. 2: shows a schematic view of the method of coded-aperture imaging according to a co-pending application of the inventors,
- Fig. 3: shows an aperture according to the invention,
- Fig. 4: shows a section of the aperture according to Fig. 3,
- Fig. 5: shows two apertures according to the invention for use with a method according to Fig. 2, and
- Fig. 6: shows the use of the mask according to Fig. 3 with aligned and rotated coding and decoding masks.

Fig. 1 shows a schematic view of the known method of coded-aperture imaging. A real object 1 comprises information 2, here the alphanumerical information "code". The real object 1 can be represented by the mathematical object O. A coded-aperture 3 is provided in front of the object 1. The coded-aperture 3 can be represented by the mathematical object M. The representation of the object 1 (white) and the information 2 (black) has been inverted in the Fig. 1 to 2 to avoid printing of a black object surface 1 within a patent document. However, the representations 5, 15, 2' show the intermediate and final results of use of the different methods using a white information 2 on a black background 1.

Light beams, one is shown as arrow 4, generate the image 5. Image 5 is an detector image provided in the plane of an array of detector elements 6. The mathematical object to describe this detector image 5 is the convolution operation O * M, wherein "*" denotes the convolution function.

According to the known techniques a calculation is performed in a computer means 7. Said calculation is a deconvolution, represented as the mathematical object G, giving rise to the decoded image of the object 8, represented by the convolution operation D * G. As can be seen, the original information 2, the word "code", is mainly reconstituted as decoded information 2'.

According to the already known applications, the reconstruction O_{rec} of the original Image O from the intermediate aperture coded image D is computed in the computer 7 as the convolution O_{rec} = D * G of the intermediate image D with a decoding mask G. Therefore O_{rec} = (O * M) * G = O * (M * G) = O * SPSF, wherein SPSF is the system point spread function. If M and G are chosen such that the SPSF is a δ-function then O_{rec} = O and the reconstruction would be perfect and the decoded information 2' identical to the original information 2.

Fig. 2 shows a schematic view of the method of coded-aperture imaging according to the co-pending application of the inventors. An aperture as described herein can preferably used with said method. The basis of said method is the information 2. However this information is not necessarily an image 1 but can be a virtual object comprising said information, e.g. a computerized and calculated representation of said information 2.

The intermediate image 15 has to be the result of a convolution of an aperture-code and real or virtual objects. The aperture code is not longer necessarily a coded mask 3 as in the prior art but a mathematical operation conducted by the computer 13. According to one embodiment of the invention the intermediate image 15 may be computed by said computer 13 as the convolution of a virtual image, containing any kind of coded information (here the word "code"), with an aperture-code, or it may be the result of a classical coded-aperture camera, where the position sensitive detector 6 has been replaced by a fluorescent screen. In the latter case the steps of providing an image and convoluting said image to obtain an intermediate image comprise the generation of light, e.g. with sources of X-rays or gamma rays, being projected through an coded aperture on a light emitting screen.

In the first mentioned case the steps of providing an image 1 and convoluting said image 1 to obtain an intermediate image 15 comprise the steps of providing data as a mathematical representation of the image 1 within said computer means 13, calculating the convolution of the image 1 with the mathematical aperture code 3 within the computer means 13 and finally displaying the result as intermediate image 15, e.g. on a computer screen. The advantage of this approach is the use of one single apparatus, a computer means, incorporating all necessary hardware and software modules to generate the information of the image and displaying directly the convoluted result on a screen (or storing them for a representation in another way).

Independently of the kind of element 3 or 13 being used, this intermediate image 15 emits light 16. The light beams 16 are preferably in the visible, infrared or ultraviolet spectrum and can e.g. be displayed by a computer screen. Any other means capable of displaying an illuminated image 15 can be used as intermediate image, for instance a printed image, e.g. a barcode, a slide projector, an overhead projector or a video beamer to name a few.

Said method is using a decoding mask 17 and a geometrical arrangement of the intermediate image 15, decoding mask 17 and photo-detectors 18. It has to be noted that the photo-detectors 18 will be able to reconstitute the original information 2, the word "code", as reconstructed information 2'. A slight rotation of the decoding mask would ruin the reconstitution of the information.

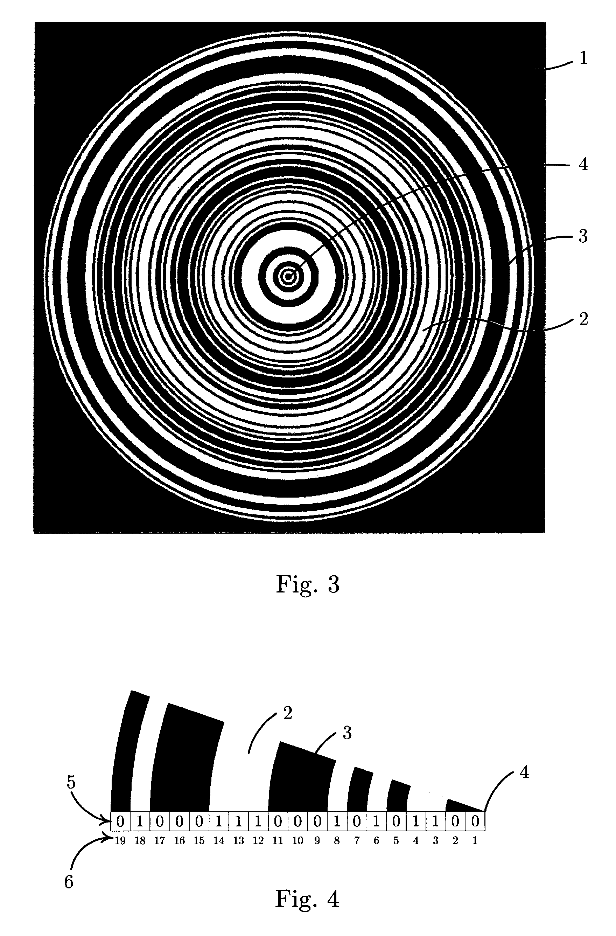

Fig. 3 shows an aperture according to the invention. The coded aperture 1 is invariant to rotation. The example shown is a MURA with N=53. It comprises a number of transparent slits 2 and opaque rings 3. All slits 2 and rings 3 are in fact concentrical elements around a center 4 of the aperture.

The aperture can be constructed as a transparent foil with printed opaque rings 3. The meaning of "transparent" relates to the fact that a detector positioned behind the aperture can see the beams being transmitted through such a transparent element, whereas said detector cannot see beams being stopped or being transmitted through "opaque" elements. This can be used, as explained below to build antimasks by color and use of color-sensitive detectors. Another application would be the combination of polarization depending masks and detectors. Beside the possibility to use color-coded masking and detection it is possible to use different masking and detection means, i.e. the use of polarization-coded masking and detection. Then the two parts of a mask/antimask transmit light with different polarizations and the detectors are adapted to detect only one of the two polarizations. This can be achieved by using a polarization foil positioned over the detectors, effectively blocking light having the other polarization. The mask/antimask pair can e.g. be formed with two mutually orthogonal linear polarization films or with two different handed circular polarization films.

Fig. 4 shows a partial section of the aperture according to Fig. 3. It can be seen that the slits 2 and rings 3 have different widths. This relates to the sequence of the one-dimensional code 5. Fig. 4 shows, according to the index 6, nineteen codes, starting in the centre 4 of the aperture 1.

The code is based on one of the one-dimensional sequences known for the construction of conventional coded aperture masks, e.g. cyclic different sets, modified uniform redundant arrays (MURA, as the aperture shown in Fig. 3), or m-sequences. The choice of the one-dimensional sequence has no impact on the invariance to rotation.

As shown in Fig. 4, one opaque ring is drawn for each "zero" of the one-dimensional sequence and one transparent circular slit is provided for each "one" of the one-dimensional sequence. All rings/slits for every information within the sequence have the same width. However, since it is possible that a number of "zeros" or "ones" are adjacent one to another, larger actual rings 3 and larger actual slits 2 are formed. They are nevertheless only a sequence of subsequent identical rings/slits for more than one identical sequence information in a row.

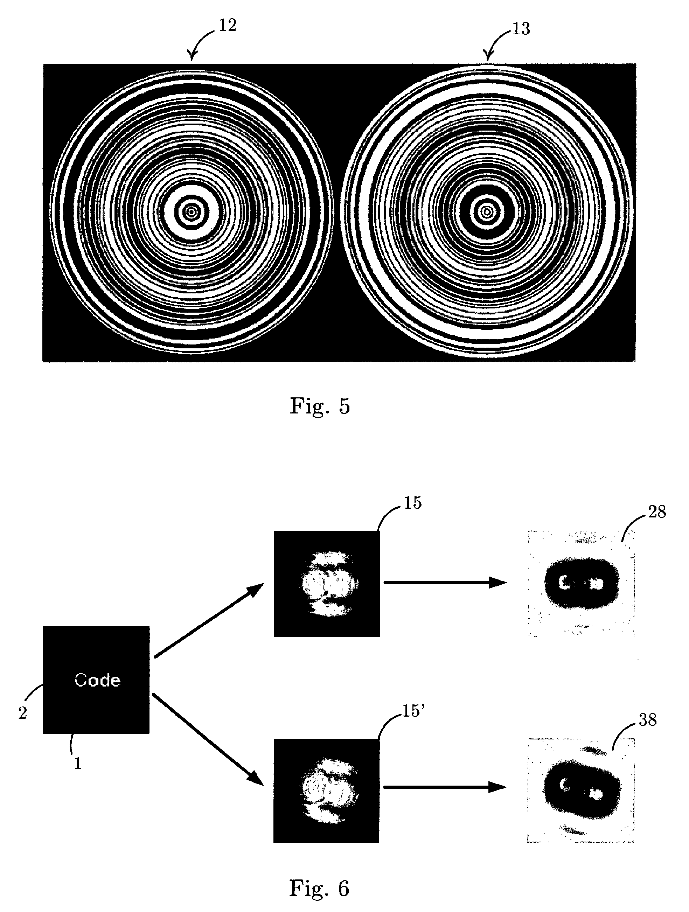

Fig. 5 shows two apertures 11 and 12 according to the invention for use with a method according to Fig. 2. The two apertures 11 and 12 are antimasks one to the other, i.e. the opaque rings 3 of one mask are transparent slits 2 within the other and vice versa.

In the case that the two masks 11 and 12 are positioned in front of a color sensitive detector 18, the masks 11 and 12 can be combined in one mask, wherein the "rings" 3 are in one color, e.g. red, and the "slits" 2 are in the other color, e.g. green. Pixels of the color sensitive detector 18 being sensitive for green will then see the rings 3 as opaque and the slits 2 as transparent, whereas the pixels being sensitive for red will then see the rings 3 as transparent and the slits 2 as opaque, effectively combining the two masks within only one being still invariant to rotation.

Because the auto-correlation of a circle is almost a δ-peak, a circular form of the aperture is suitable for the construction of a coded aperture. If the one-dimensional sequence contains nearly the same number of ones and zeros, the system point-spread function becomes nearly a Dirac function, as desired. In spite of a rotation, even in the amount of 15° or more, a clean reconstructed image may be achieved as shown in Fig. 6.

Fig. 6 shows the use of the mask according to Fig. 3 with aligned and rotated coding and decoding masks. Image 1 comprising the word "code" is transformed into in intermediate image 15. In case that the coding and decoding masks are properly aligned, the detectors see the word "code" as shown in the image 28. In case that the coding and decoding masks are rotated by 15°, the intermediate image therefore being slightly different and receiving the reference numeral 15' the detectors still see the word "code" as shown in the image 38. Therefore, a camera using said new rotation invariant aperture can detect such reconstituted information, even if a user holds the camera comprising the decoding means rotated in view of the coding means.

The aperture according to the invention can readily be used in coded-aperture imaging optical transmission of data between a screen, e.g. a computer screen, displaying the intermediate image, and a smart-card. The small size of the camera enables the integration of the coded-aperture imaging device within such a smart-card. Therefore the method is e.g. adapted to transmit coded information displayed on a computer screen directly to a smart-card. It is then not longer necessary to care about the perfect orientation of coding and decoding masks. The decoding masks 11 and 12 are positioned one beside the other according to Fig. 5. They can have a size of 1 mm x 2 mm producing two partially reconstructed images 1 mm behind them, where an array of photosensitive detectors are positioned.

The information can also be printed similar to a bar-code, e.g. a two-dimensional code. A receiver camera as mentioned above can be used to reconstruct the original image and to decode the information stored in the spots of the code-image. This can be used as a means of ticket-checking.

Instead of computing the reconstructed image of X-ray or gamma radiation as done in known coded aperture imaging, the intermediate image may directly be decoded optically. The intermediate image can be made visible by a fluorescent screen. This intermediate image can be reconstructed by decoding masks and photosensitive detectors and be presented on a screen. Like this, a handy detector for ionizing radiation may be constructed which does not need any fix computer means and which takes advantage of the rotation invariant aperture according to the invention.

## Claims

1. Aperture for coded-aperture imaging comprising a sequence of transparent (2) and opaque (3) circles, wherein the transparent (2) and opaque (3) circles represent a one-dimensional sequence known for the construction of coded aperture masks.

2. Aperture according to claim 1, wherein the one-dimensional sequence is based on cyclic different sets, modified uniform redundant arrays (MURA's) or m-sequences.

3. Aperture according to claim 1 or claim 2, wherein every transparent (2) or opaque (3) circle representing one bit of the one-dimensional code has the identical width.

4. Aperture according to one of claims 1 to 3, wherein every transparent (2) circle is in one color or transmit light with one polarization, wherein every opaque (3) circle is in a different color or transmit light with another polarization, wherein the aperture defines a mask (11) and an antimask (12), the transparent circles of the mask (11) are operating as the opaque elements of the antimask (12) and the transparent circles of antimask (12) are operating as the opaque elements of the mask (11).

5. Apparatus for coded-aperture imaging comprising:
- two apertures (11, 12) according to claims 1 to 4, one aperture (11) being the antimask (12) of the other,
- two detector means sensitive for the image information transmitted through one or the other mask (11, 12), and
- data processor means to combine the signals generated by the detector means into a reconstructed image (28, 38).

6. Apparatus according to claim 5, wherein said detector means provided to capture the transmitted radiation are color sensitive or polarization sensitive, respectively.
